# EUROPEAN PATENT SPECIFICATION

(11) **EP 0 409 741 B1**
(45) Date of publication and mention of the grant of the patent: **12.06.1996**
(21) Application number: 90402102.9
(22) Date of filing: 20.07.1990
(51) Int. Cl.: C08J 7/18, C08J 9/40, A61L 2/08

(54) **Hydrophilic porous material sterilizable with gamma-ray**
Mit Gammastrahlen sterilisierbares hydrophiles poröses Material
Matériaux hydrophile poreux stérilisable aux rayons gamma

(30) Priority: 21.07.1989 JP 187319/89
(43) Date of publication of application: 23.01.1991
(73) Proprietor: TERUMO KABUSHIKI KAISHA, Tokyo 151 (JP)
(72) Inventor: Ohnishi, Makoto, c/o Terumo Kabushiki Kaisha, Kanagawa-ken (JP); Shimura, Kenichi, c/o Terumo Kabushiki Kaisha, Kanagawa-ken (JP)
(74) Representative: Gillard, Marie-Louise

(56) References cited:
- EP-A- 0 077 227
- DE-A- 2 725 477
- GB-A- 2 058 802
- US-A- 3 854 982
- US-A- 4 131 691

## Description

### Field of the Invention:

This invention relates to a hydrophilic porous material sterilizable with γ-ray. More particularly, it relates to a γ-ray-sterilizable hydrophilic porous material which is used favorably in the medical field as for purification of blood and separation of blood plasma, for example.

### Description of the Prior Art:

In the application of medical materials to living bodies, the aspect of sterility commands an extremely important consideration besides numerous problems such as of safety and bioadaptability. This because clinical use of microorganically contaminated medical materials and medical tools has the possibility that the microorganisms will incite such adverse side effects as fever and infections diseases. Medical materials and medical tools which are incapable of tolerating thorough sterilization, therefore, are totally worthless no matter how excellent their functions may be.

Heretofore, it has been customary to effect sterilization of medical materials of porous substances by the use of an autoclave or by the exposure to ethylene oxide gas. The method of sterilization by the use of an autoclave is complicated operationally and incapable of sterilizing such medical materials in a large amount at one time. The method of sterilization with ethylene oxide gas entails the problem of residual ethylene oxide gas. In the circumstances, a method of sterilization with γ-ray which is simple in operation and free from a worry concerning any remnant of used sterilizer has been being studied as regards feasibility.

When the conventional porous materials are sterilized by exposure to γ-ray, the polymer substances forming the porous materials are deteriorated and consequently the porous materials are compelled to lose strength possibly to the extent of posing a problem of inconvenient handling due to the susceptibility of such porous materials to damage or leakage in the course of module assembly and a prolem of poor use due to susceptibility of the materials to loss of resistance to pressure in the course of actual service. Polypropylene type porous materials, for example the excellent in such properties as chemical resistance, dimensional stability, and mechanical strength therefore, are expected to find extensive utility in various medical applications. Since polypropylene rather easily succumbs to cleavage of main chain and cross-linking reaction on exposure to γ-ray, however, application of the method of sterilization with γ-ray mentioned above has room for further study.

The porous materials made of hydrophobic polymer substances represented by such polypropylene type porous materials as described above indeed excel in such properties as chemical resistance, dimensional stability, and mechanical strength and nevertheless require to undergo a treatment for imparting of hydrophilicity as by alcohol-water displacement before they are put to use for the treatment of aqueous media. Imparting hydrophilicity proves to be extremely complicated operationally. Various methods, therefore, have been heretofore proposed for modifying porous materials made of hydrophobic polymer substances as by coating their surfaces with such hydrophilic materials as surfactant, polyethylene glycol, and polyvinyl alcohol cross-linking and insolubilizing them with polymers formed mainly of such hydrophilic monomers as N,N-dimethyl acrylamide, 2-hydroxyethyl methacrylate, and N-vinyl pyrrolidone. The porous materials which have hydrophilicity imparted thereto by these methods, however, are invariably found to induce exudation in consequence of exposure to γ-ray. Use of these porous materials in medical materials, therefore, has a problem of dubious safety.

An object of this invention, therefore, is to provide a novel hydrophilic porous material sterilizable with γ-ray.

Another object of this invention is to provide a γ-ray-sterilizable hydrophilic porous material which is used favorably in the medical field as for purification of blood and separation of blood plasma.

The further object of this invention is to provide a γ-ray-sterilizable hydrophilic porous material which retains practical bursting elongation even after exposure to γ-ray, yields to exudation only sparingly, and ensures high safety.

### SUMMARY OF THE INVENTION

The objects described above are accomplished by a γ-ray-sterilizable hydrophilic porous material, which consists of a continuous layer made of a synthetic polymer compound forming a porous substrate and supported on at least part of the surface of said layer, not less than 5% by weight, based on the substrate, of a hydrophilic and γ-ray-resistant polymer, said porous material possessing an average pore diameter in the range of 0.02 to 20 µm, a porosity in the range of 10 to 90%, and a wall thickness in the range of 10 µm to 5.0 mm, said porous material being hydrophilic when water allowed to fall gently in drops on the porous material at room temperature (20° ± 5°C), it penetrates the pores in the porous material by virtue of its own weight and permeates to the further side of the porous material within 5 minutes and said porous material being γ-ray sterilizable when it possesses a bursting elongation of not less than 5% after exposure to γ-ray and a difference of not more than 0.1, based on that of the blank, between the maximum absorption wavelength of 350 and 220 nm of the autoclave extract after exposure to γ-ray in a dose of 2 Mrads.

This invention further discloses a γ-ray-sterilizable hydrophilic porous material, wherein the hydrophilic and γ-ray-resistant polymer is formed mainly of an alkoxyalkyl (meth)acrylate. This invention further discloses a γ-ray-sterilizable hydrophilic porous material, wherein the hydrophilic and γ-ray-resistant polymer is formed mainly of a monomer represented by the following general formula I: 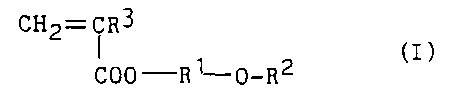 wherein R¹ is an alkylene group or a polymethylene group each of 1 to 4 carbon atoms, R² is an alkyl group of 1 or 2 carbon atoms or an alkoxyalkyl group of 2 to 4 carbon atoms, and R³ is hydrogen atom or methyl group. This invention further discloses a γ-ray-sterilizable hydrophilic porous material, wherein the synthetic polymer compound forming the porous substrate is formed mainly of a polyolefin or a halogenated polyolefin and the bursting elongation after exposure to γ-ray is not less than 5%. This invention further discloses a γ-ray-sterilizable hydrophilic porous material, wherein the synthetic polymer compound forming the porous substrate is formed mainly of a polyolefin or a polyvinylidene fluoride and the difference between the maximum absorption wavelengths of 350 and 220 nm of the autoclave extract after exposure to γ-ray is not more than 0.1, based on that of the blank.

The porous material of this invention, as described above, possesses sufficient hydrophilicity and exhibits high mechanical strength safety as regards exudation. It, therefore, can be expected to find favorable utility in the medical field as for purification of blood and separation of blood plasma. Since, it allows effective application of a method of sterilization with γ-ray, it can be sterilized infallibly and rapidly.

The porous material of the present invention acquire further prominent hydrophilicity and γ-ray resistance when the hydrophilic and γ-ray-resistant polymer is formed mainly of an alkoxyalkyl (meth)acrylate or when it is formed mainly of a monomer represented by the general formula I. Further the porous material excels in such physical properties as mechanical strength and chemical resistance when the synthetic polymer compound forming the porous substrate is formed mainly of a polyolefin, a halogenated polyolefin, or a polyvinylidene fluoride. Thus, the material is highly suitable for medical materials.

### EXPLANATION OF THE PREFERRED EMBODIMENT

Now, the present invention as embodied will be described further in detail below. The γ-ray-sterilizable hydrophilic porous material of the present invention consists of a continuous layer made of a synthetic polymer compound forming a porous substrate and supported on at least part of the surface of said layer, not less than 5% by weight, based on the substrate, of a hydrophilic and γ-ray-resistant polymer, said porous material possessing an average pore diameter in the range of 0.02 to 20 µm, a porosity in the range of 10 to 90%, and a wall thickness in the range of 10 µm to 5.0 mm, said porous material being hydrophilic when water allowed to fall gently in drops on the porous material at room temperature (20° ± 5°C), it penetrates the pores in the porous material by virtue of its own weight and permeates to the further side of the porous material within 5 minutes and said porous material being γ-ray sterilizable when it possesses a bursting elongation of not less than 5% after exposure to γ-ray and a difference of not more than 0.1, based on that of the blank, between the maximum absorption wavelength of 350 and 220 nm of the autoclave extract after exposure to γ-ray in a dose of 2 Mrads.

The porous material of the present invention is constructed as described above and, therefore, possesses outstanding hydrophilicity. The expression "possessing hydrophilicity" as used in the present specification refers to the possession by a porous material of at least such a characteristic that when water is allowed to fall gently in drops on the porous material at room temperature (20° ± 5°C), it penetrates the pores in the porous material by virtue of its own weight and permeates to the further side of the porous material within 5 minutes.

Since the porous material of this invention is constructed as described above, it excels in resistance to γ-ray and precludes the problem of deterioration of mechanical strength and occurrence of exudation after exposure to the γ-ray. Particularly when the porous material is to be used in medical materials, it is preferable to possess a bursting elongation of not less than 5% after exposure to γ-ray and a difference of not more than 0.1, based on that of the blank, between the maximum absorption wavelength of 350 and 220 nm of the autoclave extract after exposure to γ-ray. The expression "exposure to γ-ray" as used in the present specification means the fact that a given porous material is exposed to γ-ray in a dose of 2 Mrads, the magnitude enough for sterilization of the porous material. The term "bursting strength" as used in the present specification represents the magnitude determined with a tensile tester, using a sample 10 mm in width with the chuck distance set at 60 mm. The term "exudation" as used in the present specification represents the quality determined of an extract obtained by placing 1.0 g of a given porous material in 100 ml of high-purity deionized water (based on artificial kidney) and treating the immersed sample in an autoclave at 115°C for 30 minutes. This magnitude contemplated by the present invention, therefore, may well be regarded as a highly safe criterion because the sample would have produced a smaller extract under the conditions employed popularly.

The shape to be given to the hydrophilic porous material of this invention is not specifically defined but may be a hollow fiber, a flat membrane, or a ring, for example. The wall thickness of the porous material is defined by the range of 10 µm to 5.0 mm. The reason for this range is that the porous material allows no easy handling in terms of strength when the thickness is less than 10 µm and that the treatment for surface improvement with a hydrophilic and γ-ray-resistant polymer to be performed as described hereinafter possibly proceeds ununiformly in the direction of wall thickness and modules incorporating the hydrophilic porous material gain intolerably in volume when the wall thickness exceeds 5.0 mm. The average pore diameter is defined by the range of 0.02 to 20 µm. The reason for this range is that the treatment to be given to the interior of membrane is attained only with difficulty when the average pore diameter is less than 0.02 µm and that the porous material allowed no easy handling on account of deficiency in strength. The porosity is defined by the range of 10 to 90%. The reason for this range is that the porous material acquires no sufficient perviousness to air or liquid and retards the clinical treatment with the porous material when the porosity is less than 10% and that the porous material possibly suffers from deficiency in practically tolerable strength because the continuous phase is extremely deficient in thickness and volume.

In the hydrophilic porous material of the present invention, the porous substrate is not particularly discriminated on account of the synthetic polymer compound to be selected as the material therefor. Various synthetic polymer compounds are available for the formation of the porous substrate. They are, however, preferable to possess highly satisfactory physical and chemical characteristics. Specifically, such synthetic polymer compounds include polyolefins such as polyethylene and polypropylene, partially chlorinated or fluorinated polyolefins such as ethylene-dichlorodifluoroethylene copolymers, polyamides such as nylon 6 and nylon 6,6, saturated polyesters such as polyethylene terephthalate, polyacrylonitrile, and polyvinylidene fluoride, for example. Among other synthetic polymer compounds mentioned above, polyolefins, halogenated polyolefins, and polyvinylidene fluoride prove to be particularly desirable.

The hydrophilic and γ-ray-resistant polymer to be retained on at least part of the surface of the continuous phase of the porous membrane forming the substrate is preferable to be formed mainly of an alkoxyalkyl (meth)acrylate. Among numerous alkoxyalkyl (meth)acrylates which are available, those represented by the following general formula I: 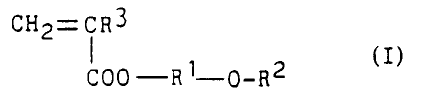 wherein R¹ is an alkylene of 1 to 4 carbon atoms such as CH₂, C₂H₄, C₃H₄ or C₄H₈ or a polymethylene group, R² is an alkyl group of 1 or 2 carbon atoms such as CH₃ or C₂H₅ or an alkoxyalkyl group of 2 to in carbon atoms such as C₂H₄OC₂H₅, C₂H₄OCH₃, CH₂OC₂H₅, or CH₂OCH₃, and R³ is hydrogen atom or methyl group) may be cited as particularly preferable monomers. Those of the acrylate type are especially preferable. The alkoxyalkyl (meth)acrylates which are usable herein specifically include methoxymethyl (meth)acrylates, methoxyethyl (meth)acrylates, methoxypropyl (meth)acrylates, methoxybutyl (meth)acrylates, ethoxymethyl (meth)acrylates, ethoxyethyl (meth)acrylates, ethoxypropyl (meth)acrylates, ethoxybutyl (meth)acrylates, (2-ethoxyethoxy)methyl (meth)acrylates, diethylene glycol monoethyl ether (meth)acrylates, 3-(2-ethoxyethoxy)propyl (meth)acryaltes, 4-(2-ethoxyethoxy)butyl (meth)acrylates, (2-methoxyethoxy)methyl (meth)acrylates, diethylene glycol monomethyl ether (meth)acrylates, 3-(2-methoxyethoxy)propyl (meth)acrylates, 4-(2-methoxyethoxy)butyl (meth)acrylates, dimethylene glycol monoethyl ether (meth)acrylates, 2-(ethoxymethoxy)ethyl (meth)acrylates, 3-ethoxymethoxy)propyl (meth)acrylates, 4-(ethoxymethoxy)butyl (meth)acrylates, dimethylene glycol monomethyl ether (meth)acrylates, 2-(methoxymethoxy)ethyl (meth)acrylates, 3-(methoxymethoxy)propyl (meth)acrylates, and 4-(methoxymethoxy)butyl (meth)acrylates, for example.

The polymerizable monomer is only required to be formed mainly of at least one monomer selected from the monomers mentioned above.

Though the retention of the hydrophilic and γ-ray-resistant polymer on at least part of the surface of the continuous layer formed of a synthetic polymer compound forming the aforementioned porous substrate may be attained by physically coating the surface with the polymer, it is attained preferable by binding the polymer in the form of a graft chain to the at least part of the surface of the continuous phase of the porous substrate. Though various methods are available for the purpose of surface grafting of the polymer, this surface grafting is preferable to be carried out by a method which comprises exposing a porous membrane destined to form the substrate to low-temperature plasma and then allowing the porous membrane to contact a monomer supplied thereto in a gaseous form thereby inducing graft polymerization of the monomer and binding a preferable polymer chain to the porous membrane by virtue of the resultant graft polymerization [JP-A-62-262,705 (1987)].

For the porous material of the present invention, it is necessary that the hydrophilic and γ-ray-resistant polymer should be retained as described above in an amount exceeding 5% by weight, preferably falling in the range of 10 to 50% by weight, based on the amount of the porous substrate. If the amount of the polymer to be retained is less than 5% by weight, there is a fair possibility that the produced porous material will acquire no fully satisfactory hydrophilicity and suffer from deficiency in physical properties. Further, if the amount is exceeding 50 % by weight, properties of the substrate sometimes decreases (for example, pores are blocked.)

Now, the present invention will be described more specifically below with reference to working examples.

### Examples 1 to 4 and Controls 1 to 4

By a biaxial extruding device, 100 parts by weight of a mixture of two species of polypropylene having melt indexes of 30 and 0.3 (weight ratio 100 : 40), 400 parts by weight of liquid paraffin (number average molecular weight 324), and 0.3 part by weight of 1,3,2,4-bis(p-ethylbenzylidene) sorbitol as a crystal seed forming agent were melted and kneaded and pelletized. In the same extruding device, the pellets were melted, extruded into the ambient air through a T-die having a slit width of 0.6 mm, led into a cooling and solidifying liquid by the rotation of guide rollers of a cooling liquid tank installed directly under the T-die, and taken up. A fixed length of the film was cut out, fixed at the opposite longitudinal ends thereof, immersed a total of four times each for 10 minutes in 1,1,2-trichloro-1,2,2-trifluoroethane thereby expelling the liquid paraffin by extraction therefrom, and heat-treated in the air at 135°C for two minutes, to obtain a porous polypropylene membrane having an average pore diameter of 0.6 µm, a porosity of 69%, and a wall thickness of 130 µm.

Subsequently, the porous membrane produced as described above was exposed to a low-temperature plasma (Ar, 0.1 Torr) for 10 seconds and allowed to contact a varying monomer indicated in Table 1 in the gaseous phase under the temperature condition of 14.85°C (288K) to effect surface graft polymerization. The graft polymerized porous membrane was washed with a solvent (methanol) for two days and dried.

The graft-treated porous material thus obtained was tested for hydrophilicity, bursting elongation after γ-ray exposure, and difference in maximum absorption wavelength at 350-220 nm of an autoclave extract after the γ-ray exposure. The results are shown in Table 1.

The various tests mentioned above were carried out as follows.

### Test for hydrophilicity:

Water was allowed to fall gently in drops at room temperature (20°±5°C) onto a sample porous material and permeate into the pores in the porous material under its own weight. When the permeating water reached the opposite surface of the sample porous material, this porous material was rated as +.

### Test for bursting elongation:

This property was determined by irradiating a sample porous material with γ-ray at a dose of 2 Mrads stretching the sample with a tensile tester (produced by Toyo Seiki K.K. and marketed under trademark designation of "Strograph T˝), with a sample width fixed at 10 mm and a chuck distance at 60 mm.

### Test for exudation:

This test was performed by irradiating a sample porous material with γ-ray at a dose of 2 Mrads, cutting a portion 1.0 g in weight from the porous material, placing the portion in 100 ml of high-purity deionized water, autoclaving the immersed portion under the conditions of 115°C and 30 minutes prescribed as standards for an artificial internal organ, measuring the maximum absorption wavelengths of the exudation at 350 to 220 nm, and finding the difference, UV, from a blank (deionized water undergone autoclaving treatment).

### Control 5

Porous polypropylene membranes produced by following the procedures of Examples 1 to 4 were subjected, without the graft treatment, to the same tests as in Examples 1 to 4. The results are shown in Table 1.

**Table 1**

| Example | Monomer | Hydrophilicity | Bursting elongation (after exposure to γ-ray) | ΔUV (after exposure to γ-ray) |
|---|---|---|---|---|
| Example 1 | Methoxyethyl acrylate | + | 9.1 | 0.017 |
| Example 2 | Methoxymethyl acrylate | + | 10.3 | 0.020 |
| Example 3 | Ethoxyethyl acrylate | + | 9.6 | 0.014 |
| Example 4 | Methoxybutyl acrylate | + | 10.5 | 0.021 |
| Control 1 | Dimethyl acrylamide | + | 3.4 | 0.178 |
| Control 2 | Acrylic acid | +*¹ | 2.3 | 0.158 |
| Control 3 | Methacrylic acid | +*¹ | 1.8 | 0.182 |
| Control 4 | 4-Vinyl pyridine | +*² | 2.1 | 0.093 |
| Control 5 (Blank) | - | - | 1.1 | 0.047 |

| | | | | |
|---|---|---|---|---|
| *1: After conversion into sodium salt form | | | | |
| *2: After quaternization with bromoethane | | | | |

It is clearly noted from Table 1 that the porous materials according with the present invention (Examples 1 to 4) invariably exhibited hydrophilicity, possessed certain degrees of elongation even after exposure to γ-ray, and showed low magnitudes of UV of the autoclave extracts, indicating the possession of resistance to γ-ray. In contrast, the porous materials of Controls 1 to 4, though exhibiting hydrophilicity acquired owing to the introduction of a hydrophilic graft chain to the surfaces, betrayed occurrence of exudations in large volume after exposure to γ-ray and showed low bursting elongations. The untreated porous polypropylene material (Control 5) showed notably inferior physical properties after exposure to γ-ray and a very low bursting elongation of 1.1%, indicating that this porous material possessed no practically necessary strength.

The present invention has been described with reference to working examples, which have been presented as intended to be merely illustrative of and not in any way limitative of the present invention.

## Claims

1. A γ-ray-sterilizable hydrophilic porous material, which consists of a continuous layer made of a synthetic polymer compound forming a porous substrate and supported on at least part of the surface of said layer, not less than 5% by weight, based on the substrate, of a hydrophilic and γ-ray-resistant polymer, said porous material possessing an average pore diameter in the range of 0.02 to 20 µm, a porosity in the range of 10 to 90%, and a wall thickness in the range of 10 µm to 5.0 mm, said porous material being hydrophilic when water allowed to fall gently in drops on the porous material at room temperature (20° ± 5°C), it penetrates the pores in the porous material by virtue of its own weight and permeates to the further side of the porous material within 5 minutes and said porous material being γ-ray sterilizable when it possesses a bursting elongation of not less than 5% after exposure to γ-ray and a difference of not more than 0.1, based on that of the blank, between the maximum absorption wavelength of 350 and 220 nm of the autoclave extract after exposure to γ-ray in a dose of 2 Mrads.

2. A hydrophilic porous material according to claim 1, wherein said hydrophilic and γ-ray-resistant synthetic polymer compound is formed mainly of an alkoxyalkyl (meth)acrylate.

3. A hydrophilic porous material according to claim 1 or claim 2, wherein said hydrophilic and γ-ray-resistant synthetic polymer compound is formed mainly of a monomer represented by the following general formula I : 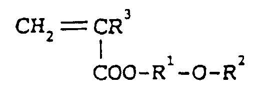 wherein R¹ is an alkylene group or a polymethylene group each of 1 to 4 carbon atoms, R² is an alkyl group of 1 to 2 carbon atoms or an alkoxyalkyl group of 2 to 4 carbon atoms, and R³ is hydrogen atom or methyl group.

4. A hydrophilic porous material according to any of claims 1 to 3, wherein said synthetic polymer compound forming said porous substrate is formed mainly of a polyolefin or a halogenated polyolefin and possesses a bursting elongation of not less than 5% after exposure to γ-ray.

5. A hydrophilic porous material according to any of claims 1 to 3, wherein said synthetic polymer compound forming said porous substrate is formed mainly of a polyolefin or a polyvinylidene fluoride and the difference in maximum absorption wavelength at 350 to 220nm of the autoclave extract after exposure to γ-ray is not more than 0.1 of that of a blank.

## Patentansprüche

1. Mit Gammastrahlen sterilisierbares hydrophiles poröses Material, welches aus einer kontinuierlichen Schicht, die aus einer ein poröses Substrat bildenden synthetischen Polymerverbindung hergestellt ist, sowie - gehalten auf wenigstens einem Teil der Oberfläche dieser Schicht - nicht weniger als 5 Gew.-%, bezogen auf das Substrat, eines hydrophilen und Gammastrahlen-beständigen Polymers besteht, wobei das poröse Material einen durchschnittlichen Porendurchmesser im Bereich von 0,02 bis 20 µm, eine Porosität im Bereich von 10 bis 90% sowie eine Wanddicke im Bereich von 10 µm bis 5,0 mm aufweist und hydrophil ist, so daß Wasser, wenn man es vorsichtig in Tropfen bei Raumtemperatur (20°C ± 5°C) auf das poröse Material fallen läßt, die Poren in dem porösen Material aufgrund seines Eigengewichts durchdringt und innerhalb von 5 Minuten auf die andere Seite des porösen Materials hindurchwandert, sowie mit Gammastrahlen sterilisierbar ist, so daß es nach Bestrahlen mit Gamma-strahlen eine Sprengverlängerung von nicht weniger als 5% und nach Bestrahlen mit Gammastrahlen in einer Dosis von 2Mrad einen Unterschied von nicht mehr als 0,1, bezogen auf den Leerwert, zwischen der Maximumabsorptionswellenlänge von 350 und 220 nm des Autoklavenextrakts aufweist.

2. Hydrophiles poröses Material nach Anspruch 1, wobei die hydrophile und Gammastrahlen-beständige synthetische Polymerverbindung hauptsächlich aus einem Alkoxyalkyl(meth)acrylat gebildet wird.

3. Hydrophiles poröses Material nach Anspruch 1 oder 2, wobei die hydrophile und Gammastrahlen-beständige synthetische Polymerverbindung hauptsächlich aus einem Monomer gebildet wird, das durch die nachfolgende allgemeine Formel (I) wiedergegeben wird: 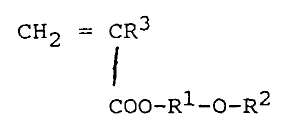 wobei R¹ eine Alkylen- oder eine Polymethylen-Gruppe mit jeweils 1 bis 4 Kohlenstoffatomen, R² eine Alkylgruppe mit 1 bis 2 Kohlenstoffatomen oder eine Alkoxyalkylgruppe mit 2 bis 4 Kohlenstoffatomen sowie R³ ein Wasserstoffatom oder eine Methylgruppe ist.

4. Hydrophiles poröses Material nach einem der Ansprüche 1 bis 3, wobei die das poröse Substrat bildende synthetische Polymerverbindung hauptsächlich aus einem Polyolefin oder einem halogenierten Polyolefin gebildet wird und eine Sprengverlängerung von nicht weniger als 5% nach Bestrahlen mit Gammastrahlen aufweist.

5. Hydrophiles poröses Material nach einem der Ansprüche 1 bis 3, wobei die das poröse Substrat bildende synthetische Polymerverbindung hauptsächlich aus einem Polyolefin oder einem Polyvinylidenfluorid gebildet wird und der Unterschied der Maximumabsorptionswellenlänge bei 350 bis 220 nm des Autoklavenextrakts nach Bestrahlen mit Gammastrahlen nicht mehr als 0,1 derjenigen des Leerwerts beträgt.

## Revendications

1. Matériau poreux hydrophile stérilisable aux rayons γ qui consiste en une couche continue constituée d'un composé polymérique synthétique formant un substrat poreux, et supporté sur une partie au moins de la surface de ladite couche, à raison d'au moins 5 % en masse, par rapport au substrat, d'un polymère hydrophile et résistant aux rayons γ, ledit matériau poreux possédant un diamètre de pore moyen dans l'intervalle de 0,02 à 20 µm, une porosité dans le domaine de 10 à 90 % et une épaisseur de paroi dans l'intervalle de 10 µm à 5,0 mm, ledit matériau poreux étant hydrophile lorsque de l'eau amenée à tomber doucement en gouttes sur le matériau poreux à la température ambiante (20 ± 5°C) pénètre dans les pores du matériau poreux du fait de son propre poids et passe à travers jusqu'à l'autre côté du matériau poreux en 5 min, et ledit matériau poreux étant stérilisable aux rayons γ lorsqu'il possède un allongement à la rupture d'au moins 5 % après exposition aux rayons γ et une différence d'au plus 0,1, par rapport à celle du témoin, entre la longueur d'onde d'absorption maximum de 350 et 220 nm de l'extrait en autoclave après exposition aux rayons γ à une dose de 2 Mrads.

2. Matériau poreux hydrophile selon la revendication 1, dans lequel ledit composé polymérique synthétique hydrophile et résistant aux rayons γ est formé principalement d'un (méth)acrylate d'alcoxyalkyle.

3. Matériau poreux hydrophile selon la revendication 1 ou la revendication 2, dans lequel ledit composé polymérique synthétique, hydrophile et résistant aux rayons γ est formé principalement d'un monomère représenté par la formule générale I suivante : 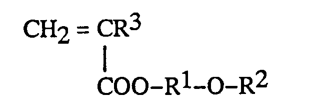 dans laquelle R¹ est un groupe alkylène ou un groupe polyméthylène de 1 à 4 atomes de carbone chacun, R² est un groupe alkyle de 1 à 2 atomes de carbone ou un groupe alcoxyalkyle de 2 à 4 atomes de carbone et R³ est un atome d'hydrogène ou un groupe méthyle.

4. Matériau poreux hydrophile selon l'une quelconque des revendications 1 à 3, dans lequel ledit composé polymérique synthétique formant ledit substrat poreux est formé principalement d'une polyoléfine ou d'une polyoléfine halogénée et possède un allongement à la rupture d'au moins 5 % après exposition aux rayons γ.

5. Matériau poreux hydrophile selon l'une quelconque des revendications 1 à 3, dans lequel ledit composé polymérique synthétique formant ledit substrat poreux est formé principalement d'une polyoléfine ou d'un poly(fluorure de vinylidène) et la différence de longueur d'onde d'absorption maximum à 350 à 220 nm de l'extrait en autoclave après exposition aux rayons γ ne dépasse pas de plus de 0,1 celle du témoin.
